# EUROPÄISCHE PATENTANMELDUNG

(11) **EP 0 878 172 A1**
(43) Veröffentlichungstag der Anmeldung: **18.11.1998**
(21) Anmeldenummer: 98810331.3
(22) Anmeldetag: 16.04.1998
(51) Int. Cl.: A61C 13/265

(54) **Präfabriziertes Anlagemodellteil**

(30) Priorität: 13.05.1997 CH 1125/97
(71) Anmelder: Carisch, Hansruedi, 4132 Muttenz (CH)
(72) Erfinder: Carisch, Hansruedi, 4132 Muttenz (CH)
(74) Vertreter: Ullrich, Gerhard, Dr.

(57) **Zusammenfassung**

Ein vorgeschlagenes präfabriziertes Anlagemodellteil (1) zur Herstellung eines Anlageteils für einen Umlauf einer Zahnprothese, einer Einzelzahnkrone oder einer Brücke besteht im wesentlichen aus einem rückstandslos verbrennbaren, elastischen Kunststoff. Es umfasst einen Basisteil (10), der im wesentlichen die Form eines Zylindermantelabschnitts hat. Am Basisteil (10) angeordnet ist eine Modellpassfläche (11), die am unteren Rand durch eine Schulter (12) begrenzt ist. Auf der Innenseite ist der Basisteil (10) mit vier kreiszylindersegmentförmigen Nuten (13-16) versehen, die Sollbiegestellen definieren. An den seitlichen Rändern des Basisteils (10) sind zwei Führungsrillen (31,32) ausgebildet.

## Beschreibung

Die vorliegende Erfindung betrifft ein präfabriziertes Anlagemodellteil zur Herstellung eines Anlageteils für einen Umlauf einer Zahnprothese, einer Einzelzahnkrone oder einer Brücke und ein Verfahren zur Herstellung eines Anlageteils mittels eines derartigen präfabrizierten Anlagemodellteils.

Die Befestigung von herausnehmbaren Zahnprothesen am Restgebiss kann mittels Geschieben, welche aus zwei Passteilen bestehen, erfolgen. Das erste Passteil ist z.B. eine Hohloder Negativform, auch Matrize genannt. Das zweite Passteil ist dann die dazu komplementäre Positivform, auch Patrize genannt. Die Matrize ist als Teil einer Krone, einer Brücke, eines Stiftzahns oder eines Brückenelements im Mund verankert, während die Patrize Bestandteil der herausnehmbaren Zahnprothese ist. Geschiebe sind feinmechanische Halte- und Stützelemente, die frikativ oder retentiv zusammenwirken, um eine Zahnprothese abnehmbar zu halten.

Konfektionierte oder manuell gefertigte Geschiebe müssen in vielen Fällen vor einer eventuellen Bruchgefahr und/oder Überbelastung geschützt werden. Aus diesem Grund werden Zahnprothesen häufig mit mindestens einem Umlauf, auch Schubverteilungsarm genannt, versehen, der bei eingesetzter Zahnprothese an einem im Mund verankerten Anlageteil anliegt. Der Anlageteil ist normalerweise in eine oder mehrere Kronen integriert und weist eine oder mehrere exakte Passflächen auf, an der bzw. denen eine oder mehrere komplementäre Passflächen des Umlaufs anliegen. Aus ästhetischen Gründen befinden sich der oder die Umläufe üblicherweise auf der Gaumenseite (palatinal) der Zähne im Oberkiefer und auf der Zungenseite (lingual) der Zähne im Unterkiefer.

Zur Herstellung eines Anlageteils wird auf ein Zahnstumpfmodell Wachs oder Kunststoff aufgebracht und ein Anlagemodellteil modelliert. Wurde zuvor am Zahnstumpfmodell ein Matrizenteil eines Geschiebes befestigt - was normalerweise bei der Herstellung eines Anlageteils für den Umlauf einer Zahnprothese, einer Einzelzahnkrone oder einer Brücke der Fall ist - werden am Anlagemodellteil eine oder mehrere Modellpassflächen mit der gleichen Parallelität wie die der Passfläche bzw. -flächen des Matrizenteils des Geschiebes von Hand oder mit Hilfe eines Motorantriebs gefräst. Das so erzeugte Kunststoff- und/oder Wachsmodell wird dann vom Zahnstumpfmodell abgenommen und mit dem sogenannten Kunststoff- und/oder Wachsausschmelz- und/oder -brennverfahren in die gewünschte metallene Form überführt.

Das Kunststoff- und/oder Wachsausschmelz- und/oder -brennverfahren basiert darauf, dass ein Kunststoff- und/oder Wachsmodell in eine Einbettmasse eingebettet wird und nach deren Abbinden in einem Ofen aufgeheizt wird. Der Kunststoff und/oder das Wachs schmilzt grösstenteils und fliesst aus der hart gewordenen Einbettmasse aus. Hierauf wird die aus der Einbettmasse und einem Giesszylinder gebildete Giessform im Ofen auf die Vorwärmtemperatur für den Metallguss gebracht, wobei Reste an Kunststoff und/oder Wachs verbrennen. Auf diese Weise ist ein Negativ des Kunststoff- und/oder Wachsmodells entstanden, in das anschliessend eine Metalllegierung gegossen wird, die zum Einsatz im Mund geeignet ist.

Nach der Herstellung des metallischen Anlageteils entsprechend dem Kunststoff- und/oder Wachsmodell wird das Anlageteil durch zylindrisches Fräsen nachbearbeitet, so dass die Passflächen des Anlageteils und des Geschiebepassteils eine möglichst identische Parallelität erhalten. Die Passfläche bzw. -flächen des Anlageteils können aber auch bezüglich der Passfläche bzw. den Passflächen des Geschiebepassteils bis zu 10° geneigt hergestellt werden. Bei einer exakten Herstellung der Passflächen und damit einer genau definierten Einschubrichtung einer Zahnprothese ist ein problemloses, frikatives Einsetzen der Zahnprothese durch den Patienten gewährleistet.

Die individuelle Herstellung solcher Anlageteile erfordert von Zahntechnikern grosses handwerkliches Geschick, so dass die in den einzelnen, individuell ausgeführten Arbeitsgängen erforderliche Präzision oftmals nicht gewährleistet ist.

Es wurden deshalb präfabrizierte, vielseitig verwendbare Anlagemodellteile aus Wachs geschaffen, die bereits Modellpassflächen aufweisen. Diese Anlagemodellteile werden am Zahnstumpfmodell fixiert, und durch Anmodellieren von Wachs wird dann das in die metallene Form zu überführende Wachsmodellteil hergestellt. Dank der präfabrizierten Anlagemodellteile entfällt das Fräsen der Modellpassfläche bzw. -flächen beim Wachsmodell.

Diese präfabrizierten Anlagemodellteile aus Wachs weisen aber den Nachteil auf, dass sie nicht flexibel sind. Unter anderem können sie daher beim Anbringen am Zahnstumpfmodell nicht aufgebogen werden, was die möglichen Anlagemodellteilformen beschränkt. Zudem müssen sie sorgfältig behandelt werden, da sie sonst zerbrechen oder die Modellpassflächen verformt werden.

Aus der DE-A-1 566 198 ist es bekannt, die metallene Matrize und Patrize eines Geschiebes mittels des erwähnten Kunststoff- und/oder Wachsausschmelz- und/oder -brennverfahrens aus relativ zueinander formschlüssigen Matrizen- und Patrizenmodellteilen herzustellen. Die Matrizen- und Patrizenmodellteile sind präfabriziert, bestehen aus einem rückstandslos verbrennbaren Material und werden mittels flüssigem Wachs gemeinsam an das Zahnstumpfmodell angebracht, wonach das Gussmodell mit flüssigem Wachs fertig modelliert wird. Die offenbarten Matrizen- und Patrizenmodellteile haben den Nachteil, dass sie nicht flexibel sind und daher beim Anbringen am Zahnstumpfmodell unter anderem nicht aufgebogen werden können. Sie können in der Breite auch nicht zugeschnitten werden. Ausserdem bezieht sich die DE-A-1 566 198 ausschliesslich auf die Herstellung eines Geschiebes mittels Matrizen- und Patrizenmodellteilen und nicht auf die Herstellung eines Anlageteils eines Umlaufs mittels eines präfabrizierten Anlagemodellteils.

Angesichts der Nachteile der bisher bekannten, oben beschriebenen präfabrizierten Anlagemodelltiele und Verfahren zur Herstellung von Anlageteilen liegt der Erfindung die folgende Aufgabe zugrunde. Zu schaffen ist ein präfabriziertes Anlagemodellteil der eingangs erwähnten Art, das flexibel ist, und ein Verfahren zur Herstellung eines Anlageteils mittels eines derartigen Anlagemodellteils.

Diese Aufgabe wird durch das erfindungsgemässe präfabrizierte Anlagemodellteil und das erfindungsgemässe Verfahren zur Herstellung eines Anlageteils gelöst, wie sie in den unabhängigen Patentansprüchen 1 bzw. 11 definiert sind. Bevorzugte Ausführungsvarianten ergeben sich aus den abhängigen Patentansprüchen.

Das Wesen der Erfindung besteht darin, dass ein präfabriziertes Anlagemodellteil zur Herstellung eines Anlageteils für einen Umlauf einer Zahnprothese, einer Einzelzahnkrone oder einer Brücke im wesentlichen aus einem rückstandslos verbrennbaren, elastischen Kunststoff besteht.

Das präfabrizierte Anlagemodellteil weist so eine Flexibilität auf, die es ermöglicht, das Anlagemodellteil individuell der jeweiligen anatomischen Gegebenheit der Zähne anzupassen, so dass es vielseitig einsetzbar ist. Ausserdem ist es weniger zerbrechlich als ein Anlagemodellteil aus Wachs, und die Modellpassfläche bzw. -flächen werden nicht unregelmässig verformt. Es hat auch eine höhere Präzision als ein von Hand hergestelltes Anlagemodell und gestattet es daher, indizierte Haltekräfte genau einzuhalten.

Eine für die bestimmungsgemässen Anwendungen geeignete Flexibilität weisen präfabrizierte Anlagemodellteile auf, die im wesentlichen aus einem Kunststoff mit einem Elastizitätsmodul von zwischen 200 und 1300 MPa bestehen.

Mit Vorteil ist der rückstandslos verbrennbare, elastische Kunststoff ein Thermoplast oder ein Gemisch von Thermoplasten. Besonders geeignet sind Polyalkylene, wie z.B. Polyethylene, oder Polyoxymethylene. Es eignen sich sowohl Homopolymere als auch Copolymere.

Dem Kunststoff können beispielsweise 1-5% eines organischen Farbstoffes beigefügt sein, um verschiedene Grössen, Formen etc. der Anlagemodellteile zu markieren. Daneben sind auch weitere Zusatzstoffe denkbar.

Das präfabrizierte Anlagemodellteil weist vorzugsweise mindestens eine Sollbiegestelle auf, die im Vergleich zu den benachbarten Anlagemodellteilbereichen dünner ausgebildet ist, wobei die Sollbiegestelle insbesondere durch Aussparung einer kreiszylindersegmentförmigen Nut im Anlagemodellteil gebildet sein kann. So kann die Flexibilität erhöht und gewährleistet werden, dass die Verformung der Modellpassfläche bzw. -flächen beim Aufbiegen des Anlagemodellteils in gewünschter Weise erfolgt.

Soll das herzustellende Anlageteil auch ein Matrizen- oder Patrizenteil eines Geschiebes enthalten, ist in das präfabrizierte Anlagemodellteil mit Vorteil ein Matrizen- oder Patrizenmodellteil integriert. Dadurch entfällt das Montieren eines separaten Matrizen- oder Patrizenmodellteils und dessen Ausrichten auf das Anlagemodellteil mittels eines Parallelometers.

Im folgenden werden das erfindungsgemässe präfabrizierte Anlagemodellteil und das erfindungsgemässe Verfahren zur Herstellung eines Anlageteils unter Bezugnahme auf die beigefügten Zeichnungen und anhand von Ausführungsbeispielen detaillierter beschrieben. Es zeigen:

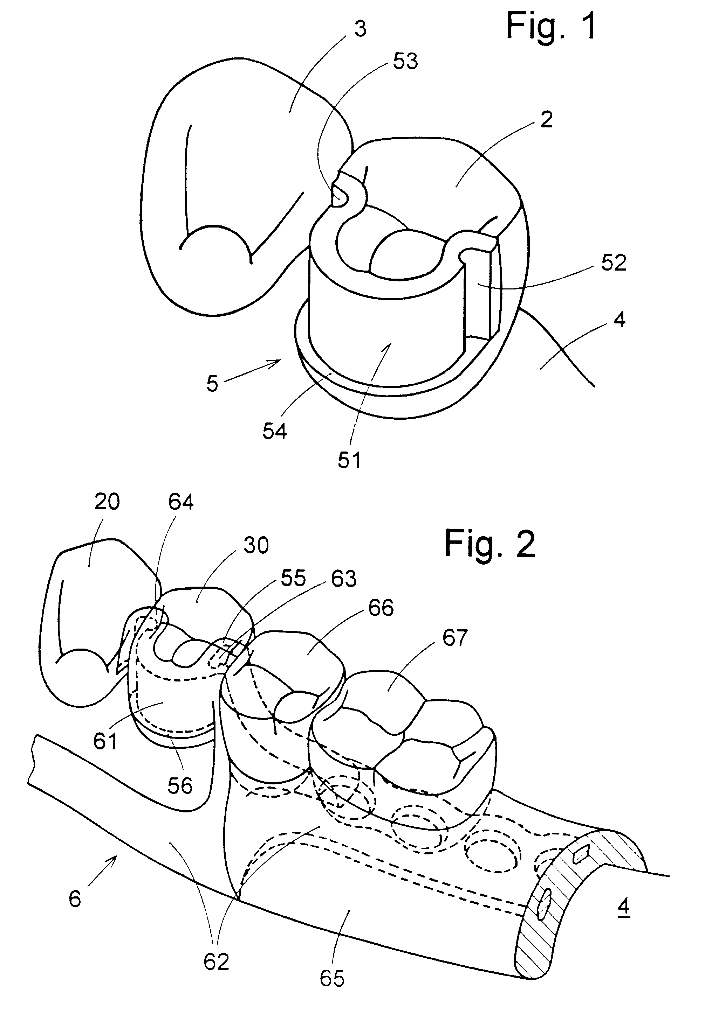

- Fig. 1 -: einen Teil eines Gebisses mit einer Zahnkrone mit integriertem Anlageteil;
- Fig. 2 -: einen Teil eines Gebisses mit einem Teil einer daran verankerten Zahnprothese;
- Fig. 3 -: ein erstes Ausführungsbeispiel eines erfindungsgemässen Anlagemodellteils zur Herstellung des Anlageteils von Fig. 1;
- Fig. 4 -: ein zweites Ausführungsbeispiel eines erfindungsgemässen Anlagemodellteils;
- Fig. 5 -: ein drittes Ausführungsbeispiel eines erfindungsgemässen Anlagemodellteils mit integriertem Matrizenmodellteil eines Geschiebes;
- Fig. 6 -: ein viertes Ausführungsbeispiel eines erfindungsgemässen Anlagemodellteils mit zwei Modellpassflächen;
- Fig. 7 -: ein fünftes Ausführungsbeispiel eines erfindungsgemässen Anlagemodellteils mit integriertem Matrizenmodellteil eines Geschiebes und zwei Modellpassflächen;
- Fig. 8 -: ein sechstes Ausführungsbeispiel eines erfindungsgemässen Anlagemodellteils und
- Fig. 9a-9c -: die wichtigsten Schritte des erfindungsgemässen Verfahrens zur Herstellung eines Anlageteils mittels eines präfabrizierten Anlagemodellteils.

### Figur 1

Der dargestellte Teil eines Gebisses besteht aus zwei miteinander verbundenen, überkronten Zähnen 2 und 3. In die eine Zahnkrone integriert, ist ein Anlageteil 5 für einen Umlauf einer Zahnprothese oder einer Brücke. Der Anlageteil 5 weist eine Passfläche 51 auf, die die Form eines Zylindermantelabschnitts hat, sowie zwei Führungsrillen 52 und 53 und eine Schulter 54. Der Kieferkamm ist mit der Bezugsziffer 4 versehen.

### Figur 2

Der gezeigte Gebissteil besteht aus zwei miteinander verbundenen, überkronten Zähnen 20 und 30, wobei die eine Zahnkrone ein Anlageteil mit integriertem Matrizenteil 55 eines Geschiebes aufweist. Das Anlageteil ist durch einen Umlauf 61, auch Schubverteilungsarm genannt, der aufgesetzten Zahnprothese 6 verdeckt und daher gestrichelt dargestellt. Der Umlauf 61 liegt mit einer Passfläche an der Passfläche des Anlageteils an, stützt sich auf der Schulter 56 des Anlageteils ab und weist einen zylindermantelabschnittsförmigen Ansatz 64 auf, der in eine Führungsrille zwischen den überkronten Zähnen 20 und 30 eingreift. Die Zahnprothese 6 umfasst einen Grundkörper 62 aus Metall (teilweise gestrichelt dargestellt), an dem der Umlauf 61 und der Patrizenteil 63 des Geschiebes angebracht sind. Grundkörper 62, Umlauf 61 und Patrizenteil 63 können z.B. miteinander verschweisst oder aus einem Stück gegossen sein. Des weiteren weist die Zahnprothese 6 einen Kunststoffteil 65 auf, der auf dem Kieferkamm 4 aufliegt und in den zwei Kunststoffzähne 66 und 67 montiert sind.

### Figur 3

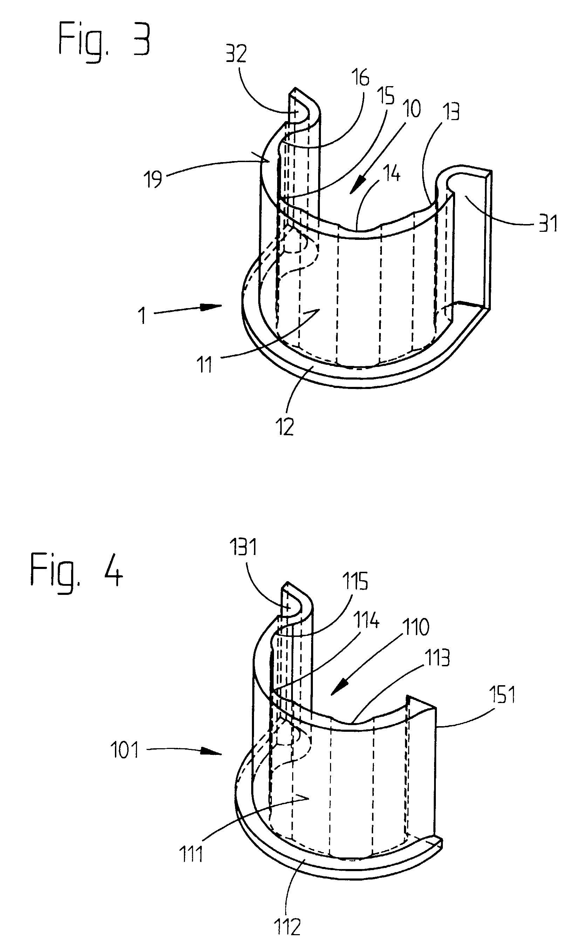

Das dargestellte präfabrizierte Anlagemodellteil 1 umfasst einen Basisteil 10, der im wesentlichen die Form eines Zylindermantelabschnitts hat. Am Basisteil 10 angeordnet, ist eine Modellpassfläche 11, die am in Fig. 3 unteren Rand durch eine Schulter 12 begrenzt ist. Auf der Innenseite ist der Basisteil 10 mit vier kreiszylindersegmentförmigen Nuten 13, 14, 15 und 16 versehen, die Sollbiegestellen definieren. An den seitlichen Rändern des Basisteils 10 sind zwei Führungsrillen 31 und 32 ausgebildet.

Je nach gegebener okklusaler anatomischer Situation können individuelle Aussparungen in die Fläche 19 des Anlagemodellteils 1 eingeschliffen werden.

### Figur 4

Das präfabrizierte Anlagemodellteil 101 umfasst einen Basisteil 110 mit einer Modellpassfläche 111 und einer Schulter 112. Die Sollbiegestellen des Basisteils 110 sind durch drei kreiszylindersegmentförmige Nuten 113, 114 und 115 definiert, während am in Fig. 4 linken seitlichen Rand des Basisteils 110 eine Führungsrille 131 ausgebildet ist.

Der rechte seitliche Rand 151 des Basisteils 110 bildet das Modell für eine Anschlagseite für dentale Geschiebe aller Art und Indikationsbereiche. Er kann je nach gegebener anatomischer Situation zurückgeschliffen werden.

### Figur 5

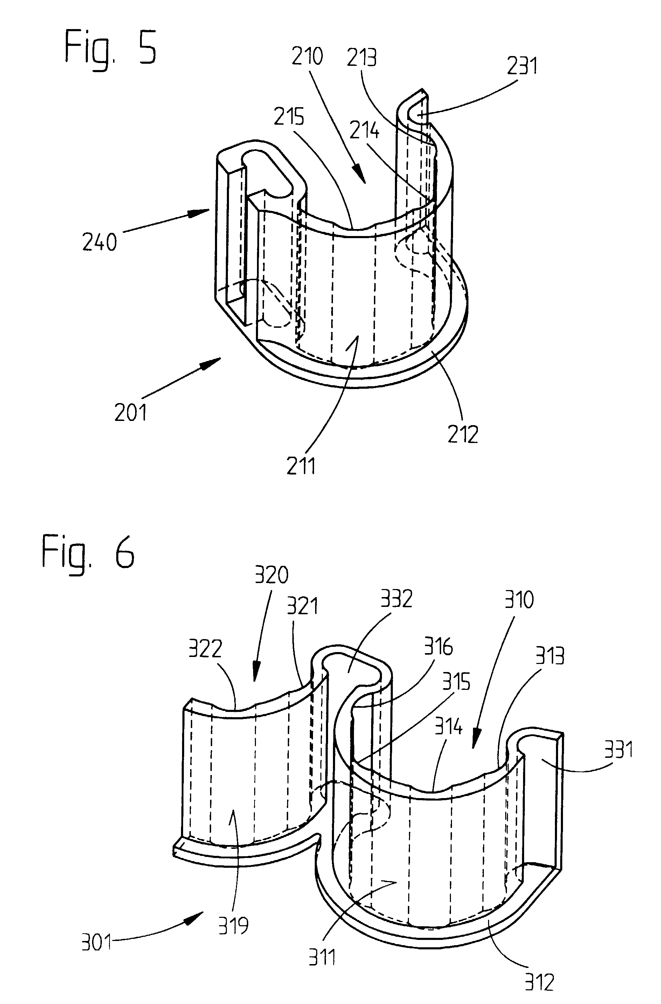

Das präfabrizierte Anlagemodellteil 201 umfasst einen Basisteil 210 mit einer Modellpassfläche 211 und einer Schulter 212. Die Sollbiegestellen des Basisteils 210 sind durch drei kreiszylindersegmentförmige Nuten 213, 214 und 215 definiert, während am in Fig. 5 rechten seitlichen Rand des Basisteils 210 eine Führungsrille 231 ausgebildet ist.

Am linken seitlichen Rand des Anlagemodellteils 201 ist ein Matrizenmodellteil 240 eines T-förmigen Geschiebes angeordnet.

### Figur 6

Das präfabrizierte Anlagemodellteil 301 umfasst zwei Basisteile 310 und 320 mit Modellpassflächen 311 und 319 und einer Schulter 312. Die Sollbiegestellen der Basisteile 310 und 320 sind durch vier bzw. zwei kreiszylindersegmentförmige Nuten 313, 314, 315 und 316 bzw. 321 und 322 definiert, während am in Fig. 6 rechten seitlichen Rand des Basisteils 310 eine Führungsrille 331 und zwischen den beiden Basisteilen 310 und 320 eine Führungsrille 332 ausgebildet ist. Die Führungsrille 332 kann sowohl zylinderförmig als auch konisch ausgebildet sein. Der Fundus dieser Führungsrille kann etwas tiefer oder höher liegen als die Schulter 312. Der Fundus kann z.B. flach oder halbkugelförmig sein.

### Figur 7

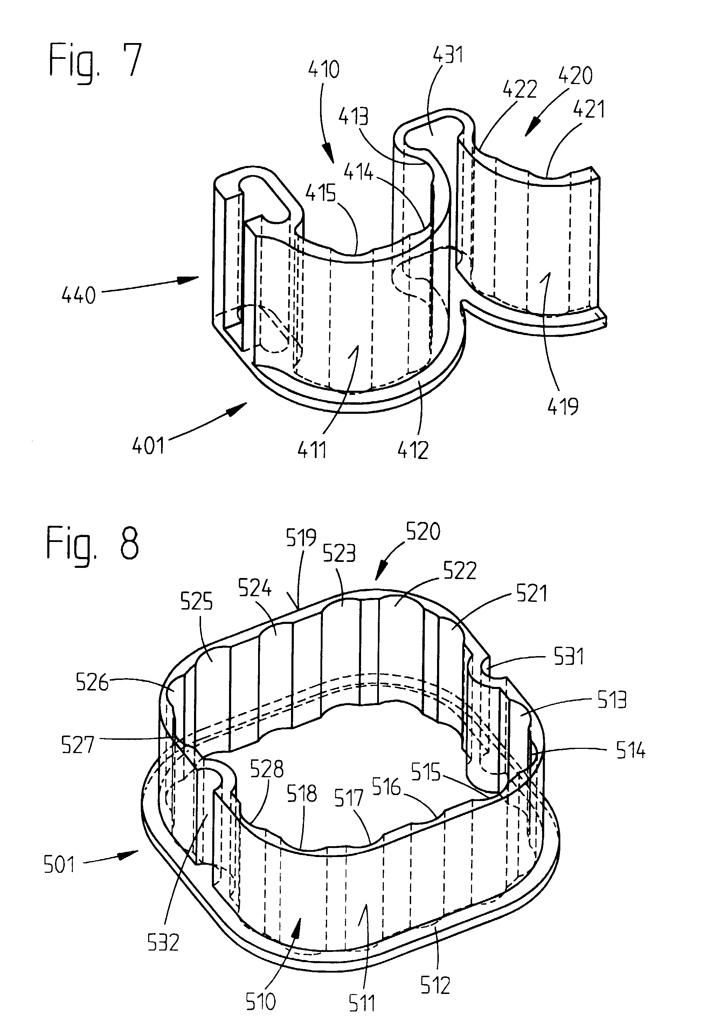

Das präfabrizierte Anlagemodellteil 401 umfasst zwei Basisteile 410 und 420 mit Modellpassflächen 411 und 419 und einer Schulter 412. Die Sollbiegestellen der Basisteile 410 und 420 sind durch drei bzw. zwei kreiszylindersegmentförmige Nuten 413, 414 und 415 bzw. 421 und 422 definiert, während zwischen den beiden Basisteilen 410 und 420 eine Führungsrille 431 ausgebildet ist. Die Führungsrille 431 kann sowohl zylinderförmig als auch konisch ausgebildet sein. Der Fundus dieser Führungsrille kann etwas tiefer oder höher liegen als die Schulter 412. Der Fundus kann z.B. flach oder halbkugelförmig sein. Am in Fig. 7 linken seitlichen Rand des Anlagemodellteils 401 ist ein Matrizenmodellteil 440 eines T-förmigen Geschiebes angeordnet.

### Figur 8

Das präfabrizierte Anlagemodellteil 501 umfasst zwei Basisteile 510 und 520 mit Modellpassflächen 511 und 519 und einer Schulter 512. Die Sollbiegestellen der Basisteile 510 und 520 sind durch je sieben kreiszylindersegmentförmige Nuten 513-518 und 528 bzw. 521-527 definiert. Die beiden Basisteile 510 und 520 sind ringförmig miteinander verbunden, wobei an den beiden Verbindungsstellen Führungsrillen 531 und 532 ausgebildet sind.

Das Anlagemodellteil 501 kann direkt in der vorliegenden Form an einem Zahnstumpfmodell angeordnet werden oder zuvor auf- oder zugeschnitten werden.

### Figuren 9a-9c

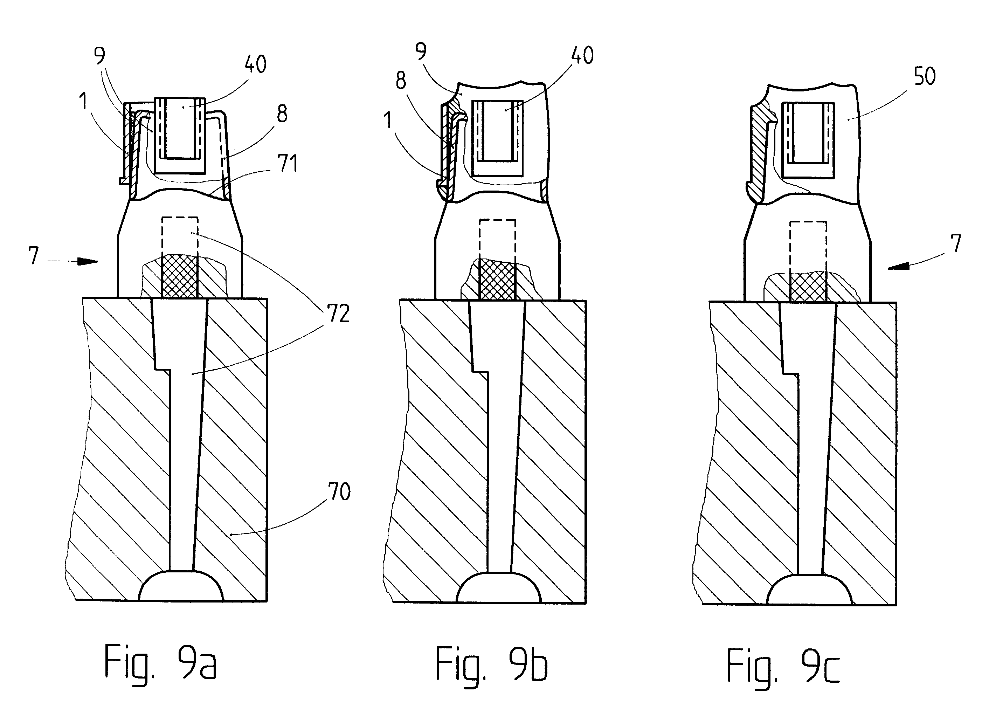

Ein mögliches Verfahren zur Herstellung eines Anlageteils für einen Umlauf einer Zahnprothese, Einzelzahnkrone oder Brücke mittels eines erfindungsgemässen präfabrizierten Anlagemodellteils, z.B. Anlagemodellteil 1, umfasst - ausgehend von einem vorhandenen Zahnstumpfmodell 7, bei dem die Zahnpräparationsgrenze 71 exakt durch Wegschleifen des Zahnfleischkragens definiert werden kann und das im allgemeinen Teil eines Gipsmodells ist und mit einem Repositionsstift 72 aus Metall im Basisteil 70 des Gipsmodells fixiert ist - die folgenden Schritte:
- Versehen des Zahnstumpfmodells 7 mit einer Kappe 8 aus Kunststoff- oder Wachs, beispielsweise durch Tiefziehen einer Kunststofffolie oder Aufmodellieren von Wachs. Die Kappe 8 weist z.B. eine Dicke von 0,3 bis 0,5 mm auf.
- Anordnen und Fixieren des präfabrizierten Anlagemodellteils 1 an der Kappe 8, derart, dass das Anlagemodellteil 1 die Kappe 8 teilweise umfasst, wobei das Anlagemodellteil 1 hierzu erforderlichenfalls aufgebogen wird. Zum Anbringen eines Anlagemodellteils 501 gemäss Fig. 8 muss dieses normalerweise auf- oder zugeschnitten werden. Das Fixieren des präfabrizierten Anlagemodellteils 1 erfolgt normalerweise mit Wachs 9.
   Im dargestellten Beispiel wird auch ein separates Matrizenmodellteil 40 mit Wachs 9 an der Kappe 8 fixiert, wobei das Anlagemodellteil 1 und das Matrizenmodellteil 40 mittels eines Parallelometers aufeinander ausgerichtet werden.
   Es besteht nun die in Fig. 9a dargestellte Situation.
- Auffüllen des noch vorhandenen Raumes zwischen Kappe 8 und Anlagemodellteil 1 mit Wachs 9 und Anbringen von Wachs 9 auf der Kappe 8.
- Ausmodellieren des Wachses 9, so dass die Situation von Fig. 9b erreicht wird.
- Überführen des erzeugten Kunststoff- und Wachsmodells in eine metallene Form (Herstellen des Anlageteils 50). Hierzu wird das Kunststoff- und Wachsmodell zunächst vom Zahnstumpfmodell 7 abgenommen und danach das bekannte, in der Einleitung beschriebene Kunststoff- und/oder Wachsausschmelz- und/oder -brennverfahren angewandt. In Fig. 9c ist das gegossene Anlageteil 50 aufgesetzt auf das Zahnstumpfmodell 7 gezeigt.

Die exakte(n) Passfläche bzw. -flächen des Anlageteils, an die die komplementäre(n) Passfläche bzw. -flächen des Umlaufs zu liegen kommt bzw. kommen, wird bzw. werden schliesslich durch Feinfräsen und Polieren erzeugt.

Zu den vorbeschriebenen präfabrizierten Anlagemodellteilen sind weitere konstruktive Variationen realisierbar. Hier ausdrücklich erwähnt sei noch, dass die Basisteile anstatt zylindermantelabschnittsförmig auch kegelmantelabschnittsförmig sein können, wobei die Konizität vorzugsweise kleiner gleich 10° ist.

## Patentansprüche

1. Präfabriziertes Anlagemodellteil (1;101;201;301; 401;501) zur Herstellung eines Anlageteils (5;50) für einen Umlauf (61) einer Zahnprothese (6), einer Einzelzahnkrone oder einer Brücke, dadurch gekennzeichnet, dass es im wesentlichen aus einem rückstandslos verbrennbaren, elastischen Kunststoff besteht.

2. Präfabriziertes Anlagemodellteil nach Anspruch 1, dadurch gekennzeichnet, dass der Kunststoff einen E-Modul von zwischen 200 und 1300 MPa aufweist.

3. Präfabriziertes Anlagemodellteil nach Anspruch 1 oder 2, dadurch gekennzeichnet, dass der Kunststoff ein Thermoplast oder ein Gemisch von Thermoplasten ist, wobei als Thermoplasten insbesondere Polyalkylene, wie z.B. Polyethylene, oder Polyoxymethylene verwendbar sind.

4. Präfabriziertes Anlagemodellteil nach Anspruch 3, dadurch gekennzeichnet, dass dem Kunststoff 1-5% eines organischen Farbstoffes beigefügt sind.

5. Präfabriziertes Anlagemodellteil nach einem der Ansprüche 1 bis 4, dadurch gekennzeichnet, dass es mindestens eine exakte Modellpassfläche (11;111;;211;311,319; 411,419;511,519) aufweist, die so gestaltet ist, dass die dieser beim fertiggestellten Anlageteil (5;50) entsprechende Passfläche (51) zur lösbaren Verbindung mit einer Passfläche der Zahnprothese (6) oder der Brücke verwendbar ist.

6. Präfabriziertes Anlagemodellteil nach Anspruch 5, dadurch gekennzeichnet, dass die Modellpassfläche bzw. -flächen am einen Rand durch eine Schulter (12;112;212;312; 412;512) begrenzt ist bzw. sind.

7. Präfabriziertes Anlagemodellteil nach einem der Ansprüche 1 bis 6, dadurch gekennzeichnet, dass es mindestens einen Basisteil (10;110;210;310,320;410,420;510,520) umfasst, der im wesentlichen die Form eines Zylinder- oder Kegelmantelabschnitts hat, wobei die Konizität vorzugsweise kleiner gleich 10° ist.

8. Präfabriziertes Anlagemodellteil nach einem der Ansprüche 1 bis 7, dadurch gekennzeichnet, dass es mindestens eine Sollbiegestelle aufweist, die im Vergleich zu den benachbarten Anlagemodellteilbereichen dünner ausgebildet ist, wobei die Sollbiegestelle insbesondere durch Aussparung einer kreiszylindersegmentförmigen Nut (13-16; 113-115;213-215;313-316,321,322;413-415,421,422;513-518, 521-528) im Anlagemodellteil gebildet sein kann.

9. Präfabriziertes Anlagemodellteil nach einem der Ansprüche 1 bis 8, dadurch gekennzeichnet, dass es mindestens eine Führungsrille (31,32;131;231;331,332;431; 531,532) aufweist.

10. Präfabriziertes Anlagemodellteil nach einem der Ansprüche 1 bis 9, dadurch gekennzeichnet, dass ein Matrizen- (240;440) oder Patrizenmodellteil eines Geschiebes integriert ist.

11. Verfahren zur Herstellung eines Anlageteils (5; 50) für einen Umlauf (61) einer Zahnprothese (6), einer Einzelzahnkrone oder einer Brücke mittels eines präfabrizierten Anlagemodellteils (1;101;201;301;401;501) nach einem der Ansprüche 1 bis 10, dadurch gekennzeichnet, dass sie die folgenden Schritte umfasst:
• Versehen eines Zahnstumpfmodells (7) mit einer Kappe (8) aus Kunststoff- oder Wachs;
• Anordnen und Fixieren des präfabrizierten Anlagemodellteils an der Kappe, derart, dass das Anlagemodellteil die Kappe teilweise umfasst, wobei das Anlagemodellteil hierzu erforderlichenfalls aufgebogen und/oder zugeschnitten wird;
• Auffüllen des eventuell noch vorhandenen Raumes zwischen Kappe und Anlagemodellteil mit Wachs (9) und Anbringen von Wachs (9) auf der Kappe;
• Ausmodellieren des Wachses;
• Abnehmen des erzeugten Kunststoff- und Wachsmodells vom Zahnstumpfmodell (7) und Einbetten desselben in eine Einbettmasse;
• Ausschmelzen und/oder -brennen des Kunststoff- und Wachsmodells aus der Einbettmasse und
• Giessen des Anlageteils (5;50).
